# EUROPEAN PATENT APPLICATION

(11) **EP 4 050 684 A1**
(43) Date of publication of application: **31.08.2022**
(21) Application number: 20879027.9
(22) Date of filing: 13.10.2020
(51) Int. Cl.: H01M 4/38, H01M 4/66, H01M 10/052, H01M 10/0565, H01M 50/409

(54) **ALUMINUM FOIL, LITHIUM SECONDARY BATTERY NEGATIVE ELECTRODE, LITHIUM SECONDARY BATTERY SEPARATOR, AND LITHIUM SECONDARY BATTERY**

(30) Priority: 25.10.2019 JP 2019194133
(71) Applicant: Panasonic Intellectual Property Management Co., Ltd., Osaka-shi, Osaka 540-6207 (JP)
(72) Inventor: MATSUI, Tooru, Osaka-shi, Osaka 540-6207 (JP); MORITA, Hiromi, Osaka-shi, Osaka 540-6207 (JP); IWAI, Yoshiki, Osaka-shi, Osaka 540-6207 (JP); HARA, Kohei, Osaka-shi, Osaka 540-6207 (JP); SUZUKI, Hirotetsu, Osaka-shi, Osaka 540-6207 (JP); SAKATA, Motohiro, Osaka-shi, Osaka 540-6207 (JP)
(74) Representative: Novagraaf International SA
(86) International application number: PCT/JP2020/038574
(87) International publication number: WO 2021/079784

(57) **Abstract**

An aluminum foil comprising an aluminum foil substrate that has a porous region, wherein the porous region is formed throughout the entirety of the aluminum foil substrate in the thickness direction thereof.

## Description

### TECHNICAL FIELD

The present disclosure relates to a lithium secondary battery.

### BACKGROUND

As a secondary battery having a high output and a high energy density, a lithium secondary battery which includes a positive electrode, a negative electrode, and an electrolyte solution and performs charge and discharge by moving lithium ions between the positive electrode and the negative electrode is widely used.

As a negative electrode material for a lithium secondary battery, for example, aluminum capable of absorbing lithium by being alloyed with lithium is known (see, for example, Patent Literature1).

Thus, an aluminum foil can be used as a negative electrode of the lithium secondary battery, but the aluminum foil greatly expands and contracts due to charging and discharging, so that damage such as wrinkles and breakage occurs in the aluminum foil. As a result, for example, there is a problem that the charge-discharge cycle characteristics of the lithium secondary battery are deteriorated.

In a lithium secondary battery, a separator having a lithium ion permeation property is conventionally interposed between the positive electrode and the negative electrode.

Incidentally, a separator using a material capable of absorbing lithium ions has been proposed (see, for example, Patent Literatures 2 and 3). In Patent Literature 2, an aluminum foil is used for the separator, but the aluminum foil, which is nonporous, has a low lithium ion permeation property.

### CITATION LIST

### PATENT LITERATURE

Patent Literature 1: US 4002492 B
Patent Literature 2: JP H08-180853 A
Patent Literature 3: JP 2010-219012 A

### SUMMARY

An aluminum foil according to an aspect of the present disclosure includes an aluminum foil substrate having a porous region, wherein the porous region is formed throughout a thickness of the aluminum foil substrate.

The aluminum foil of the present disclosure can suppress deterioration of charge-discharge cycle characteristics when the aluminum foil is used as a negative electrode of a lithium secondary battery. The aluminum foil of the present disclosure has a lithium ion permeation property, and can be used as a separator of a lithium secondary battery.

### BRIEF DESCRIPTION OF DRAWINGS

Fig.1 is a schematic sectional view illustrating an example of an aluminum foil according to the present embodiment.
Fig. 2 is a schematic sectional view illustrating another example of the aluminum foil according to the present embodiment.
Fig. 3 is a cross-sectional SEM photograph illustrating another example of the aluminum foil according to the present embodiment.
Fig. 4 is a view illustrating an example of a production apparatus for the aluminum foil according to the present embodiment.
Fig. 5 is a schematic sectional view illustrating an example of a lithium secondary battery of the present embodiment.
Fig. 6 is a schematic sectional view illustrating an example of the lithium secondary battery of the present embodiment.
Fig. 7 is a schematic sectional view illustrating another example of the battery structure when the aluminum foil of the present embodiment is used as a separator.
Fig. 8 is a schematic sectional view illustrating another example of the battery structure when the aluminum foil of the present embodiment is used as a separator.

### DESCRIPTION OF EMBODIMENTS

Hereinafter, an example of an aluminum foil according to an aspect of the present disclosure, a lithium secondary battery using the aluminum foil according to an aspect of the present disclosure as a negative electrode, and a lithium secondary battery using the aluminum foil according to an aspect of the present disclosure as a separator will be described. The drawings referred to in the following description of the embodiments are schematically illustrated, and dimensional ratios and the like of components drawn in the drawings may be different from those of actual components. In addition, in the present specification, the description of "numerical value (1) to numerical value (2)" means numerical value (1) or more and numerical value (2) or less.

### <Aluminum Foil>

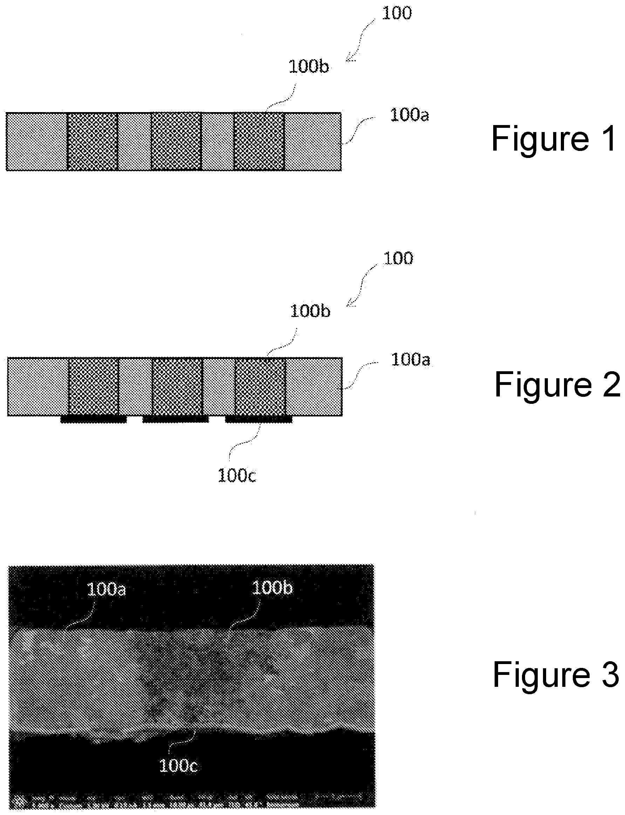

Fig. 1 is a schematic sectional view illustrating an example of an aluminum foil according to the present embodiment. An aluminum foil 100 according to the present embodiment includes an aluminum foil substrate 100a having a porous region 100b. The porous region 100b is formed throughout the thickness of the aluminum foil substrate 100a. The porous region 100b has continuous pores in which a plurality of pores complicatedly communicate in the thickness direction. All the pores present in the porous region 100b do not need to completely communicate, and may include independent pores in a non-communicating state. In any case, the electrolyte solution infiltrates into the porous region 100b, and lithium ions in the electrolyte solution pass through the porous region 100b. That is, the aluminum foil 100 according to the present embodiment has an ion permeation property and can be used as a separator of a lithium secondary battery. When the aluminum foil 100 is used as a negative electrode of a lithium secondary battery, lithium ions are absorbed on the surface of the aluminum foil 100 or inside the porous region 100b during charging, and the absorbed lithium ions are released during discharging. The expansion and contraction of the aluminum foil 100 due to absorption and release of lithium ions is alleviated by the porous region 100b, so that damage to the aluminum foil 100 is suppressed. As a result, deterioration of the charge-discharge cycle characteristics of the lithium secondary battery is suppressed as compared with the aluminum foil 100 having no porous region 100b.

A plurality of porous regions 100b formed in the aluminum foil substrate 100a is formed at intervals in the surface direction of the aluminum foil substrate 100a, for example.

An Al-Li alloy is preferably present in the porous region 100b. Specifically, at least a part of the aluminum foil substrate 100a in the porous region 100b is made of an Al-Li alloy. As described above, the presence of the Al-Li alloy in the porous region 100b increases the lithium ion conductivity of the porous region 100b. Therefore, when the aluminum foil 100 in which the Al-Li alloy is present in the porous region 100b is used as a negative electrode or a separator, the battery characteristics of the lithium secondary battery can be improved.

Fig. 2 is a schematic sectional view illustrating another example of the aluminum foil according to the present embodiment. Fig. 3 is a cross-sectional SEM photograph illustrating another example of the aluminum foil according to the present embodiment. As illustrated in Figs. 2 and 3, the aluminum foil 100 according to the present embodiment includes an Al-Li alloy layer 100c disposed on one surface of the aluminum foil substrate 100a so as to cover the porous region 100b. In the aluminum foil 100 having such a structure, the electrolyte solution enters the porous region 100b from one surface of the aluminum foil substrate 100a and reaches the other surface of the aluminum foil substrate 100a, but the solvent in the electrolyte solution is blocked by the Al-Li alloy layer 100c, and as a result, the solvent hardly passes through the aluminum foil 100. However, lithium ions in the electrolyte solution can pass through the Al-Li alloy layer 100c, and therefore, the aluminum foil 100 has a lithium ion permeation property. Although not illustrated in the drawings, the aluminum foil 100 according to the present embodiment may have Al-Li alloy layers 100c disposed so as to cover the porous region 100b on both surfaces of the aluminum foil substrate 100a. Even when the Al-Li alloy layers 100c are provided on both surfaces of the aluminum foil substrate 100a, lithium ions enter the porous region 100b through one Al-Li alloy layer 100c, and lithium ions in the porous region 100b move out of the porous region 100b through the other Al-Li alloy layer 100c. Therefore, the aluminum foil 100 having the Al-Li alloy layer 100c disposed so as to cover the porous region 100b on one surface or both surfaces of the aluminum foil substrate 100a has an ion permeation property, and can be used as a separator of a lithium secondary battery. When the aluminum foil 100 having the Al-Li alloy layer 100c disposed so as to cover the porous region 100b on one surface or both surfaces of the aluminum foil substrate 100a is used as a negative electrode, the inside of the porous region 100b can be efficiently used as a reaction region with lithium, so that battery characteristics may be improved.

Incidentally, in a two-liquid lithium battery using a positive electrode electrolyte solution as an electrolyte solution in contact with a positive electrode and using a negative electrode electrolyte solution as an electrolyte solution in contact with a negative electrode, optimal electrolyte solutions can be used for the positive electrode and the negative electrode, respectively. Therefore, the two-liquid lithium battery can achieve high energy density, high durability, and high output of the lithium secondary battery. In such a two-liquid lithium battery, when a separator through which the solvent in the electrolyte solution easily passes is used, the solvent in the positive electrode electrolyte solution moves to the negative electrode side through the separator to be subjected to reductive decomposition, and the solvent in the negative electrode electrolyte solution moves to the positive electrode side through the separator to be subjected to oxidative decomposition. Therefore, it is not possible to obtain a merit of using the electrolyte solution as two liquids. However, in the case of the aluminum foil according to the present embodiment, the porous region 100b is made of continuous pores in which a plurality of pores complicatedly communicate in the thickness direction, and thus the solvent in the electrolyte solution hardly passes. In particular, in the case of the aluminum foil 100 having the Al-Li alloy layer 100c disposed so as to cover the porous region 100b on one surface or both surfaces of the aluminum foil substrate 100a, as described above, the solvent in the electrolyte solution hardly passes through the aluminum foil 100. Therefore, the aluminum foil 100 of the present embodiment can separate the positive electrode electrolyte solution and the negative electrode electrolyte solution, and thus can also be used as a separator of a two-liquid lithium secondary battery. In the conventional resin separator, the solvent in the electrolyte solution easily passes through the pores of the separator, and therefore it is difficult to separate the positive electrode electrolyte solution and the negative electrode electrolyte solution.

The thickness of the aluminum foil substrate 100a is appropriately set depending on the use for a separator, use for a negative electrode, or the like. The thickness is, for example, preferably in the range of 1 µm to 200 µm, and more preferably in the range of 5 µm to 150 µm, from the viewpoint of securing the strength and flexibility of the aluminum foil 100, and the like.

The average pore size of the pores constituting the porous region 100b is appropriately set depending on the use for a separator, use for a negative electrode, or the like. The average pore size is, for example, preferably in the range of 0.0001 µm to 10 µm, and more preferably in the range of 0.001 µm to 5 µm, from the viewpoint of securing the strength and flexibility of the aluminum foil 100, and the like.

The Al-Li alloy layer 100c may be formed on the entire one surface or the entire both surfaces of the aluminum foil substrate 100a.

### <Method for Producing Aluminum Foil 100>

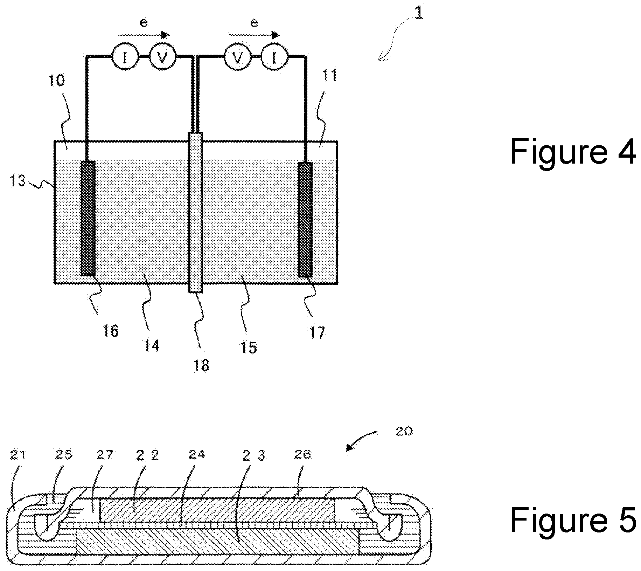

Fig. 4 is a schematic view illustrating an example of a production apparatus for an aluminum foil according to the present embodiment. The production apparatus 1 illustrated in Fig. 4 includes an electrolytic bath 13 having a first chamber 10 and a second chamber 11, electrolyte solutions (14, 15) filled in the first chamber 10 and the second chamber 11, a counter electrode 16 immersed in the electrolyte solution 14 in the first chamber 10, and a counter electrode 17 immersed in the electrolyte solution 15 in the second chamber 11. The counter electrode 16 in the first chamber 10 and the counter electrode 17 in the second chamber 11 are made of lithium metal. The electrolyte solutions (14, 15) filled in the first chamber 10 and the second chamber 11 contain a lithium salt and an organic solvent. The electrolyte solutions (14, 15) filled in the first chamber 10 and the second chamber 11 may have the same composition or different compositions.

When the aluminum foil according to the present embodiment is produced, an aluminum foil substrate 18 is provided between the first chamber 10 and the second chamber 11 so that the first chamber 10 and the second chamber 11 do not communicate with each other, the first chamber 10 and the second chamber 11 are respectively filled with the electrolyte solutions (14, 15), and the electrodes are provided. That is, one surface of the aluminum foil substrate 18 is in contact with the electrolyte solution 14 in the first chamber 10, and a surface opposite to the one surface of the aluminum foil substrate 18 is in contact with the electrolyte solution 15 in the second chamber 11. Then, the counter electrode 16 of the first chamber 10 and the aluminum foil substrate 18 are electrically connected to cause a reduction current to flow to one surface of the aluminum foil substrate 18, and the counter electrode 17 of the second chamber 11 and the aluminum foil substrate 18 are electrically connected to cause an oxidation current to flow to a surface opposite to the one surface of the aluminum foil substrate 18. As a result, an Al-Li alloy is formed on the one surface of the aluminum foil substrate 18 by the reduction current, and aluminum is eluted by the oxidation current on the surface opposite to the one surface of the aluminum foil substrate 18. By continuing this treatment for a predetermined time, a porous region is formed throughout the thickness of the aluminum foil substrate 18, an Al-Li alloy is formed in the porous region, and an Al-Li layer disposed so as to cover the porous region is formed on the one surface of the aluminum foil substrate 18. In addition, an Al-Li alloy is formed by applying a reduction current to one surface of the aluminum foil substrate 18, and then an Al-Li alloy is formed by applying a reduction current to a surface opposite to the one surface of the aluminum foil substrate 18, whereby an aluminum foil having Al-Li alloy layers formed on both surfaces of the aluminum foil substrate 18 is obtained. The aluminum foil having a porous region formed throughout the thickness of the aluminum foil substrate 18 is obtained only by applying an oxidation current to one surface of the aluminum foil substrate 18. Here, from the viewpoint of uniformity of the porous region in the thickness direction, it is preferable to cause an oxidation current to flow simultaneously from both surfaces of the aluminum foil substrate 18.

The reduction current density of the aluminum foil substrate 18 with respect to one surface is, for example, in the range of 1 µA/cm² to 100 mA/cm². The oxidation current density of the aluminum foil substrate 18 with respect to a surface opposite to the one surface is, for example, in the range of 10 µA/cm² to 1,000 mA/cm². The energization time (treatment time) of the reduction current and the oxidation current is, for example, in the range of 1 millisecond to 1,000 hours.

As the lithium salt contained in the electrolyte solutions (14, 15) filled in the first chamber 10 and the second chamber 11, a known lithium salt or the like used for the electrolyte solution of the lithium secondary battery can be used, and for example, LiPF₆ or the like can be used. As the organic solvent contained in the electrolyte solutions (14, 15) filled in the first chamber 10 and the second chamber 11, a known organic solvent used for the electrolyte solution of the lithium secondary battery or the like can be used. Examples thereof include cyclic carbonic acid esters such as propylene carbonate (PC); cyclic carboxylic acid esters such as γ-butyrolactone; and chain carboxylic acid esters such as methyl acetate.

### <Lithium Secondary Battery Using Aluminum Foil of Present Embodiment as Negative Electrode>

Fig. 5 is a schematic sectional view illustrating an example of the lithium secondary battery of the present embodiment. A lithium secondary battery 20 illustrated in Fig. 5 includes a cup-shaped battery case 21; an electrode assembly having a positive electrode 22, a negative electrode 23, and a separator 24 provided between the positive electrode 22 and the negative electrode 23; a gasket 25 made of an insulating material; and a sealing plate 26 that is disposed in an opening of the battery case 21 and seals the battery case 21 via the gasket 25. In the lithium secondary battery 20 illustrated in Fig. 5, a space between the positive electrode 22 and the negative electrode 23 is filled with an electrolyte solution 27. The lithium secondary battery 20 illustrated in Fig. 5 is a so-called coin type or button type, but the form of the lithium secondary battery of the present embodiment is not particularly limited. The lithium secondary battery may be, for example, a cylindrical type, a flat type, a square type, a laminate type, or the like. The electrode assembly including the positive electrode 22, the negative electrode 23, and the separator 24 may be, for example, a wound electrode assembly formed by winding a positive electrode and a negative electrode with a separator interposed therebetween, a stacked electrode assembly formed by alternately stacking a positive electrode and a negative electrode with a separator interposed therebetween, or the like.

The positive electrode 22 includes, for example, a positive electrode current collector and a positive electrode mixture layer formed on the positive electrode current collector. As the positive electrode current collector, a foil of a metal which is stable in the potential range of the positive electrode, such as aluminum, a film in which the metal is disposed on a surface layer thereof, or the like can be used. The thickness of the positive electrode current collector is preferably, for example, 3 µm or more and 50 µm or less from the viewpoint of current collectability, mechanical strength, and the like.

The positive electrode mixture layer contains a positive electrode active material. The positive electrode mixture layer may also contain a binder, a conductive agent, and the like.

Examples of the positive electrode active material include lithium transition metal oxides containing lithium (Li) and a transition metal element such as cobalt (Co), manganese (Mn), and nickel (Ni). Other examples of the positive electrode active material include transition metal sulfides, metal oxides, lithium-containing polyanionic compounds containing one or more types of transition metals, such as lithium iron phosphate (LiFePO₄) and lithium iron pyrophosphate (Li₂FeP₂O₇), sulfur-based compounds (Li₂S), and oxygen-containing metal salts which contain oxygen, lithium oxide, or the like. The positive electrode active material is preferably a lithium-containing transition metal oxide. The positive electrode active material preferably contains at least one of Co, Mn, and Ni as a transition metal element.

The lithium transition metal oxide may contain other additive elements other than Co, Mn, and Ni, and may contain, for example, aluminum (Al), zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (In each chemical formula, M is at least one of Na, Mg, Sc, Y, Mn, Fe, Co, Ni, Cu, Zn, Al, Cr, Pb, Sb, and B, and 0 < x ≤ 1.2, 0 < y ≤ 0.9, and 2.0 ≤ z ≤ 2.3.). The lithium transition metal oxide may be used singly or in combination of two or more types thereof. From the viewpoint of increasing the capacity, the lithium transition metal oxide preferably contains 80 mol% or more of Ni with respect to the total amount of transition metals other than lithium. From the viewpoint of stability of the crystal structure, the lithium transition metal oxide is more preferably LiₐNi_{b}Co_{c}Al_{d}O₂ (0 < a ≤ 1.2, 0.8 ≤ b < 1, 0 < c < 0.2, 0 < d ≤ 0.1, b + c + d = 1).

As the conductive agent, a known conductive agent that enhances the electrical conductivity of the positive electrode mixture layer can be used. Examples thereof include carbon materials such as carbon black, acetylene black, Ketjen black, graphite, carbon nanofiber, carbon nanotube, and graphene. As the binder, a known binder that maintains a good contact state of the positive electrode active material and the conductive agent and enhances the binding property of the positive electrode active material and the like to the surface of the positive electrode current collector can be used. Examples thereof include fluororesins such as polytetrafluoroethylene (PTFE) and polyvinylidene fluoride (PVDF), polyacrylonitrile (PAN), polyimide, acrylic resins, polyolefins, carboxymethyl cellulose (CMC) or salts thereof, styrene-butadiene rubber (SBR), polyethylene oxide (PEO), polyvinyl alcohol (PVA), and polyvinyl pyrrolidone (PVP).

The positive electrode 22 can be produced by, for example, applying a positive electrode mixture slurry containing a positive electrode active material, a binder, a conductive agent, and the like onto a positive electrode current collector, and drying and rolling the applied film to form a positive electrode mixture layer on the positive electrode current collector.

As the negative electrode 23, the aluminum foil of the present embodiment is used. That is, as the negative electrode 23, an aluminum foil including an aluminum foil substrate having a porous region formed throughout the thickness of the aluminum foil substrate is used. As described above, the porous region formed in the aluminum foil substrate alleviates expansion and contraction associated with absorption and release of lithium ions, so that damage to the negative electrode 23 (aluminum foil) is suppressed. As a result, deterioration of charge-discharge cycle characteristics of the lithium secondary battery 20 is suppressed.

In addition, an Al-Li alloy is preferably present in the porous region. As a result, the lithium ion conductivity in the porous region is increased, so that the battery characteristics of the lithium secondary battery 20 may be improved. Specifically, the initial capacity of the lithium secondary battery may be improved.

An Al-Li alloy layer is preferably disposed on one surface or both surfaces of the aluminum foil substrate so as to cover the porous region. As a result, the inside of the porous region can be efficiently used as a reaction region with lithium, so that battery characteristics may be improved. Specifically, the initial capacity of the lithium secondary battery may be improved. When an aluminum foil including an Al-Li alloy layer disposed on one surface of the aluminum foil substrate is used as a negative electrode and a lithium transition metal oxide such as LiₓCoO₂ is used as a positive electrode active material, it is preferable to dispose the negative electrode (aluminum foil) such that a surface of the aluminum foil substrate on which the Al-Li alloy layer is not disposed faces the positive electrode 22 with the separator 24 interposed therebetween. As a result, lithium ions easily move into the porous region, and battery characteristics may be improved.

The thickness of the aluminum foil substrate is, for example, preferably in the range of 10 µm to 200 µm, and more preferably in the range of 50 µm to 150 µm, from the viewpoint of improving battery characteristics while securing the strength and flexibility of the aluminum foil.

The average pore size of the pores constituting the porous region is, for example, preferably in the range of 0.1 µm to 10 µm, and more preferably in the range of 0.5 µm to 5 µm, from the viewpoint of improving battery characteristics while securing the strength and flexibility of the aluminum foil.

As the separator 24, for example, a porous sheet that transmits lithium ions is used. Specific examples of the porous sheet include a microporous thin film, a woven fabric, and a nonwoven fabric. Examples of the material of the porous sheet include olefin resins such as polyethylene and polypropylene, polyamide, polyamideimide, and cellulose. The porous sheet may be a laminate including a cellulose fiber layer and a thermoplastic resin fiber layer of an olefin resin or the like. In addition, the porous sheet may be a multilayer including a polyethylene layer and a polypropylene layer, and a porous sheet having a surface coated with a material such as an aramid resin or ceramic may be used. As described later, the aluminum foil of the present embodiment may be used as the separator 24.

The electrolyte solution contains a solvent and an electrolyte salt dissolved in the solvent. A gel electrolyte such as a gel polymer may be used instead of the electrolyte solution.

Examples of the solvent that can be used include carbonates, esters, ethers, nitriles such as acetonitrile, amides such as dimethylformamide, and mixed solvents of two or more types thereof. The solvent may contain a halogen-substituted compound in which at least a part of hydrogen in these solvents is substituted with a halogen atom such as fluorine.

Examples of the esters include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted compound, it is preferable to use a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like.

Examples of the electrolyte salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, Lil, Li (P(C₂O₄)F₄), LiPF₆₋ₓ(CₙF_{2n + 1})x (1 < x < 6, n is 1 or 2), chloroborane lithium, borates, and imide salts. Examples of the borates include Li [B(C₂O₄)₂], Li[B(C₂O₄)F₂], Li₂B₄O₇, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonic acid-O,O')borate. Examples of the imide salts include lithium bis(trifluoromethanesulfonyl)imide (LiTFSI), lithium bis(perfluoroethanesulfonyl)imide (LiBETI), lithium(perfluoroethanesulfonyl)(trifluoromethanesulfonyl)imide, lithium bis(fluorosulfonyl)imide (LiFSI), and lithium(fluorosulfonyl)(trifluoromethanesulfonyl)imide (LiFTI). Among them, LiPF₆, LiTFSI, LiBF₄, LiSbF₆, LiCF₃SO₃, and LiCF₃CO₂ are preferable in terms of battery characteristics. These electrolyte salts may be used singly or in combination of two or more types thereof. The concentration of the electrolyte salt is, for example, preferably 0.5 to 3 mol/L, and more preferably 0.8 to 1.8 mol/L.

### <Lithium Secondary Battery Using Aluminum Foil of Present Embodiment as Separator>

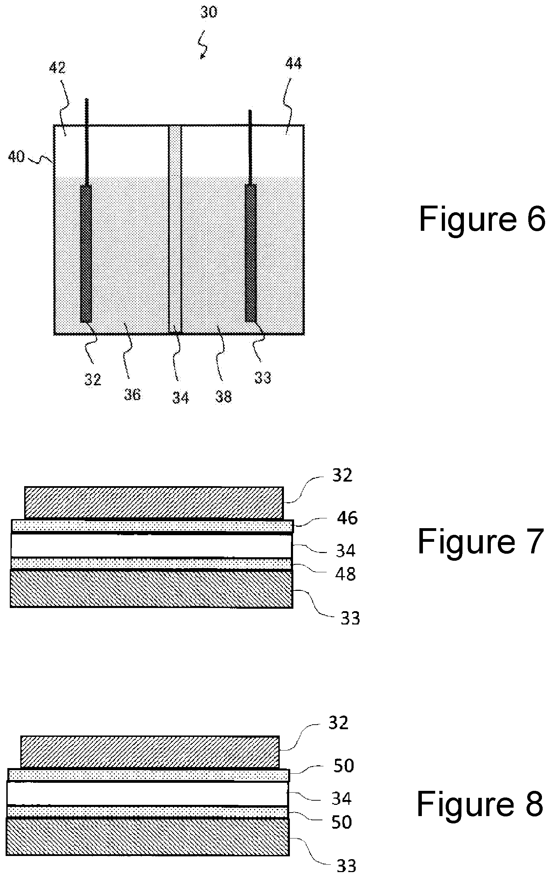

Fig. 6 is a schematic sectional view illustrating an example of the lithium secondary battery of the present embodiment. A lithium secondary battery 30 illustrated in Fig. 6 includes a positive electrode 32, a negative electrode 33, a separator 34 which is disposed at intervals with respect to each of the positive electrode 32 and the negative electrode 33, a positive electrode electrolyte solution 36, a negative electrode electrolyte solution 38, and a container 40.

In the lithium secondary battery 30 illustrated in Fig. 6, the inside of the container 40 is separated into a positive electrode chamber 42 and a negative electrode chamber 44 by the separator 34. The positive electrode 32 and the positive electrode electrolyte solution 36 are housed in the positive electrode chamber 42. The negative electrode 33 and the negative electrode electrolyte solution 38 are housed in the negative electrode chamber 44.

The positive electrode 32 includes, for example, a positive electrode current collector and a positive electrode mixture layer formed on the positive electrode current collector. As the positive electrode current collector, a foil of a metal which is stable in the potential range of the positive electrode 32, such as aluminum, a film in which the metal is disposed on a surface layer thereof, or the like can be used. The thickness of the positive electrode current collector is preferably, for example, 3 µm or more and 50 µm or less from the viewpoint of current collectability, mechanical strength, and the like.

The positive electrode mixture layer contains a positive electrode active material. The positive electrode mixture layer may also contain a binder, a conductive agent, and the like.

Examples of the positive electrode active material include lithium transition metal oxides containing lithium (Li) and a transition metal element such as cobalt (Co), manganese (Mn), and nickel (Ni). Other examples of the positive electrode active material include transition metal sulfides, metal oxides, lithium-containing polyanionic compounds containing one or more types of transition metals, such as lithium iron phosphate (LiFePO₄) and lithium iron pyrophosphate (Li₂FeP₂O₇), sulfur-based compounds (Li₂S), and oxygen-containing metal salts which contain oxygen, lithium oxide, or the like. The positive electrode active material is preferably a lithium-containing transition metal oxide. The positive electrode active material preferably contains at least one of Co, Mn, and Ni as a transition metal element.

The lithium transition metal oxide may contain other additive elements other than Co, Mn, and Ni, and may contain, for example, aluminum (Al), zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (In each chemical formula, M is at least one of Na, Mg, Sc, Y, Mn, Fe, Co, Ni, Cu, Zn, Al, Cr, Pb, Sb, and B, and 0 < x ≤ 1.2, 0 < y ≤ 0.9, and 2.0 ≤ z ≤ 2.3.). The lithium transition metal oxide may be used singly or in combination of two or more types thereof. From the viewpoint of increasing the capacity, the lithium transition metal oxide preferably contains 80 mol% or more of Ni with respect to the total amount of transition metals other than lithium. From the viewpoint of stability of the crystal structure, the lithium transition metal oxide is more preferably LiₐNi_{b}Co_{c}Al_{d}O₂ (0 < a ≤ 1.2, 0.8 ≤ b < 1, 0 < c < 0.2, 0 < d ≤ 0.1, b + c + d = 1).

As the conductive agent, a known conductive agent that enhances the electrical conductivity of the positive electrode mixture layer can be used. Examples thereof include carbon materials such as carbon black, acetylene black, Ketjen black, graphite, carbon nanofiber, carbon nanotube, and graphene. As the binder, a known binder that maintains a good contact state of the positive electrode active material and the conductive agent and enhances the binding property of the positive electrode active material and the like to the surface of the positive electrode current collector can be used. Examples thereof include fluororesins such as polytetrafluoroethylene (PTFE) and polyvinylidene fluoride (PVDF), polyacrylonitrile (PAN), polyimide, acrylic resins, polyolefins, carboxymethyl cellulose (CMC) or salts thereof, styrene-butadiene rubber (SBR), polyethylene oxide (PEO), polyvinyl alcohol (PVA), and polyvinyl pyrrolidone (PVP).

The positive electrode 32 can be produced by, for example, applying a positive electrode mixture slurry containing a positive electrode active material, a binder, a conductive agent, and the like onto a positive electrode current collector, and drying and rolling the applied film to form a positive electrode mixture layer on the positive electrode current collector.

The negative electrode 33 includes, for example, a negative electrode current collector and a negative electrode mixture layer formed on the negative electrode current collector. As the negative electrode current collector, a foil of a metal which is stable in the potential range of the negative electrode 33, such as copper, a film in which the metal is disposed on a surface layer thereof, or the like can be used. The thickness of the negative electrode current collector is preferably, for example, 3 µm or more and 50 µm or less from the viewpoint of current collectability, mechanical strength, and the like.

The negative electrode mixture layer contains a negative electrode active material. In addition, the negative electrode mixture layer may contain a binder, a conductive agent, and the like. As the conductive agent and the binder, the same materials as those for the positive electrode 32 side can be used.

Examples of the negative electrode active material include carbonaceous materials such as natural graphite, artificial graphite, and amorphous carbons such as soft carbon and hard carbon. The negative electrode active material may be a material capable of absorbing and releasing lithium ions. Examples of the negative electrode active material other than the carbonaceous material include elements such as silicon, titanium, germanium, tin, lead, zinc, magnesium, sodium, aluminum, potassium, and indium, alloys, and oxides.

The negative electrode 33 can be produced by, for example, applying a negative electrode mixture slurry containing a negative electrode active material, a binder, and the like onto a negative electrode current collector, and drying and rolling the applied film to form a negative electrode mixture layer on the negative electrode current collector. The negative electrode 33 can also be produced by bonding a lithium metal foil on the negative electrode current collector.

As the separator 34, the aluminum foil of the present embodiment is used. That is, as the separator 34, an aluminum foil including an aluminum foil substrate having a porous region formed throughout the thickness of the aluminum foil substrate is used. As described above, lithium ions pass through the porous region formed in the aluminum foil substrate. Therefore, during charge and discharge, lithium ions can move between the positive electrode 32 and the negative electrode 33 via the aluminum foil as the separator 34.

In addition, the porous region formed in the aluminum foil substrate is continuous pores in which a plurality of pores complicatedly communicate in the thickness direction. Such continuous pores suppress the movement of the positive electrode electrolyte solution 36 toward the negative electrode chamber 44 via the separator 34 (aluminum foil) and the movement of the negative electrode electrolyte solution 38 toward the positive electrode chamber 42 via the separator 34 (aluminum foil).

In addition, an Al-Li alloy is preferably present in the porous region. As a result, the lithium ion conductivity in the porous region is increased, so that the battery characteristics of the lithium secondary battery 30 may be improved. Specifically, the initial capacity of the lithium secondary battery 30 may be improved.

An Al-Li alloy layer is preferably disposed on one surface or both surfaces of the aluminum foil substrate so as to cover the porous region. For example, in a case where the Al-Li alloy layer is formed on one surface of the aluminum foil substrate, even when the electrolyte solution enters the porous region from one surface of the aluminum foil substrate on which the Al-Li alloy layer is not formed and reaches the other surface on which the Al-Li alloy layer is formed, the solvent in the electrolyte solution is blocked by the Al-Li alloy layer. As a result, the solvent hardly passes through the separator 34 (aluminum foil). In a case where the Al-Li alloy layer is formed on both surfaces of the aluminum foil substrate, the solvent in the electrolyte solution hardly enters the porous region. Therefore, when the aluminum foil in which the Al-Li alloy layer disposed so as to cover the porous region is formed on one surface or both surfaces of the aluminum foil substrate is used as the separator 34, it is possible to more effectively suppress the movement of the positive electrode electrolyte solution 36 toward the negative electrode chamber 44 via the separator 34 and the movement of the negative electrode electrolyte solution 38 toward the positive electrode chamber 42 via the separator 34.

As described above, by suppressing the movement of the negative electrode electrolyte solution 38 and the positive electrode electrolyte solution 36 through the separator 34, the reductive decomposition of the electrolyte solution on the negative electrode chamber 44 side and the oxidative decomposition of the electrolyte solution on the positive electrode chamber 42 side are suppressed. As a result, the occurrence of side reactions associated with charging and discharging is suppressed. Accordingly, it is possible to achieve high energy density, high durability, and high output of the lithium secondary battery 30. The conventional resin separator has good compatibility with the electrolyte solution, and it is difficult to form continuous pores that complicatedly communicate. Therefore, the movement of the electrolyte solution cannot be sufficiently suppressed with the conventional resin separator, so that a merit of using two electrolyte solutions cannot be obtained.

The thickness of the aluminum foil substrate is, for example, preferably in the range of 1 µm to 200 µm, and more preferably in the range of 5 µm to 20 µm, from the viewpoint of securing a lithium ion permeation property and suppressing the movement of the solvent in the electrolyte solution while securing the strength and flexibility of the aluminum foil.

The average pore size of the pores constituting the porous region is, for example, preferably in the range of 0.0001 µm to 10 µm, and more preferably in the range of 0.001 µm to 2 µm, from the viewpoint of, for example, securing a lithium ion permeation property and suppressing the movement of the solvent in the electrolyte solution while securing the strength and flexibility of the aluminum foil.

When the aluminum foil of the present embodiment is used as the separator 34, the positive electrode 32 and the negative electrode 33 need to be separated from the separator 34 so that the positive electrode 32 and the negative electrode 33 are not electrically conducted via the separator 34.

The positive electrode electrolyte solution 36 and the negative electrode electrolyte solution 38 in the present embodiment may have the same composition, but preferably have optimal electrolyte solution compositions from the viewpoint of achieving high energy density, high durability, and high output. Hereinafter, suitable compositions as the positive electrode electrolyte solution 36 and the negative electrode electrolyte solution 38 will be exemplified.

For example, the oxidation potential (vs. Li/Li⁺) of the solvent used for the positive electrode electrolyte solution 36 is preferably higher than the oxidation potential (vs. Li/Li⁺) of the solvent used for the negative electrode electrolyte solution 38, and for example, is preferably higher by about 0.5 V to 2.0 V. Furthermore, the oxidation potential (vs. Li/Li⁺) of the solvent used for the positive electrode electrolyte solution 36 is more preferably higher than the full charge potential (vs. Li/Li⁺) of the positive electrode active material, and for example, is more preferably higher by 0.2 V or more than the full charge potential (vs. Li/Li⁺) of the positive electrode active material. As a result, oxidative decomposition of the positive electrode electrolyte solution 36 in the positive electrode 32 is more highly suppressed.

Preferable examples of the solvent used for the positive electrode electrolyte solution 36 include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); chain carboxylic acid esters such as methyl acetate, ethyl acetate, propyl acetate, methyl propionate (MP), and ethyl propionate; fluorinated cyclic carbonic acid esters such as fluoroethylene carbonate (FEC); fluorinated chain carbonic acid esters such as trifluorodimethyl carbonate (TFDMC); and fluorinated chain carboxylic acid esters such as methyl fluoropropionate (FMP).

The solvent used for the negative electrode electrolyte solution 38 is preferably, for example, a solvent in which reductive decomposition at the negative electrode 33 hardly occurs. Examples of the solvent include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salts used for the positive electrode electrolyte solution 36 and the negative electrode electrolyte solution 38 may be the same or different as long as they are lithium salts that are generally used for a lithium secondary battery. Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, Li (P(C₂O₄)F₄), LiPF₆₋ₓ(CₙF_{2n + 1})x (1 < x < 6, n is 1 or 2), chloroborane lithium, borates, and imide salts. Examples of the borates include Li [B(C₂O₄)₂], Li[B(C₂O₄)F₂], Li₂B₄O₇, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonic acid-O,O')borate. Examples of the imide salts include lithium bis(trifluoromethanesulfonyl)imide (LiTFSI), lithium bis(perfluoroethanesulfonyl)imide (LiBETI), lithium(perfluoroethanesulfonyl)(trifluoromethanesulfonyl)imide, lithium bis(fluorosulfonyl)imide (LiFSI), and lithium(fluorosulfonyl)(trifluoromethanesulfonyl)imide (LiFTI). These electrolyte salts may be used singly or in combination of two or more types thereof.

The concentration of the electrolyte salt in the positive electrode electrolyte solution 36 is, for example, preferably 0.5 mol/L to 3.0 mol/L, and more preferably 0.8 mol/L to 1.8 mol/L. The concentration of the electrolyte salt in the negative electrode electrolyte solution 38 is, for example, preferably 0.5 mol/L to 3.0 mol/L, and more preferably 0.8 mol/L to 1.8 mol/L.

Hereinafter, a modification of the battery structure when the aluminum foil of the present embodiment is used as a separator will be described.

Fig. 7 is a schematic sectional view illustrating another example of the battery structure when the aluminum foil of the present embodiment is used as a separator. As illustrated in Fig. 7, the lithium secondary battery of the present embodiment may adopt a battery structure in which a positive electrode gel electrolyte layer 46 is disposed between the positive electrode 32 and the separator 34 which is the aluminum foil of the present embodiment, and a negative electrode gel electrolyte layer 48 is disposed between the negative electrode 33 and the separator 34 which is the aluminum foil of the present embodiment, instead of the above-described positive electrode electrolyte solution and negative electrode electrolyte solution. The thicknesses of the positive electrode gel electrolyte layer 46 and the negative electrode gel electrolyte layer 48 are, for example, about 5 µm to 100 µm.

The positive electrode gel electrolyte layer 46 can be formed, for example, by applying a precursor solution obtained by adding a polymer precursor, a polymerization initiator, and the like to the above-described positive electrode electrolyte solution, onto the positive electrode mixture layer, and then allowing a polymerization reaction to proceed under appropriate conditions to gelate the precursor solution. The negative electrode gel electrolyte layer 48 can also be formed in the same manner.

The polymerization temperature at the time of gelation may be appropriately selected, and can be, for example, about 80 to 140°C. The polymerization time may also be appropriately selected, and can be, for example, about 5 minutes to 3 hours. The term "polymerization reaction" as used herein may be any reaction that can contribute to gelation (curing) of the precursor solution, and examples thereof include a crosslinking reaction and a condensation reaction.

The polymer precursor may be either a polyfunctional polymer precursor or a monofunctional polymer precursor, but a polymer precursor (polyfunctional polymer precursor) having two or three or more polymerizable (crosslinkable) functional groups is preferable. Specific examples thereof include ethylene oxide (EO), propylene oxide (PO), acrylonitrile (AN), and vinylidene fluoride (VDF). A polymer precursor having a thermally polymerizable (thermally crosslinkable) functional group is typically used.

The polymerization initiator can be appropriately selected and used according to the type of the polymer precursor to be used. A thermal polymerization initiator is typically used. As the thermal polymerization initiator, various conventionally known initiators such as azo-based and peroxide-based initiators can be used. Preferable examples of the polymerization initiator include azobisisobutyronitrile (AIBN) and benzoyl peroxide (BPO).

Fig. 8 is a schematic sectional view illustrating another example of the battery structure when the aluminum foil of the present embodiment is used as a separator. In the lithium secondary battery of the present embodiment, as illustrated in Fig. 8, a porous sheet 50 may be disposed between the positive electrode 32 and the separator 34 which is the aluminum foil of the present embodiment, and between the negative electrode 33 and the separator 34 which is the aluminum foil of the present embodiment. The porous sheet 50 desirably has high electrical insulating property and a function of transmitting lithium ions. Specific examples of the porous sheet 50 include a microporous thin film, a woven fabric, and a nonwoven fabric. Examples of the material of the porous sheet 50 include olefin resins such as polyethylene and polypropylene, polyamide, polyamideimide, and cellulose. The porous sheet 50 may be a laminate including a cellulose fiber layer and a thermoplastic resin fiber layer of an olefin resin or the like. In addition, the porous sheet 50 may be a multilayer including a polyethylene layer and a polypropylene layer, and the surface of the porous sheet 50 may be coated with a material such as an aramid resin or ceramic.

The porous sheet 50 disposed between the positive electrode 32 and the separator 34 which is the aluminum foil of the present embodiment may be impregnated with the above-described positive electrode electrolyte solution. The porous sheet 50 disposed between the negative electrode 33 and the separator 34 which is the aluminum foil of the present embodiment may be impregnated with the above-described negative electrode electrolyte solution.

The positive electrode mixture layer constituting the positive electrode 32 is preferably a clay-like wet film containing a positive electrode active material, a binder, a conductive agent, and the above-described positive electrode electrolyte solution. The positive electrode mixture layer is obtained by applying a positive electrode mixture slurry containing a positive electrode active material, a binder, a conductive agent, a positive electrode electrolyte solution and the like onto a positive electrode current collector. Similarly, the negative electrode mixture layer constituting the negative electrode 33 is preferably a clay-like wet film containing a negative electrode active material, a binder, and a negative electrode electrolyte solution. The negative electrode mixture layer is obtained by applying a negative electrode mixture slurry containing a negative electrode active material, a binder, a negative electrode electrolyte solution, and the like onto a negative electrode current collector.

### EXAMPLES

Hereinafter, the present disclosure will be further described with reference to examples, but the present disclosure is not limited to these examples.

### [Production of Aluminum Foil]

Using the production apparatus illustrated in Fig. 4, an oxidation current was applied to both surfaces of an aluminum foil substrate having a thickness of 12 µm under the following conditions.

Electrolyte solution: LiTFSI/PC = 1/10 (molar ratio)
Oxidation current density: 10 µA/cm²
Treatment time: 1 hour

When the cross section of the treated aluminum foil substrate was observed by SEM, it was confirmed that a porous region was formed throughout the thickness of the aluminum foil substrate. This was used as an aluminum foil A.

Using the production apparatus illustrated in Fig. 4, a reduction current was applied to one surface of an aluminum foil substrate, and an oxidation current was applied to the other surface opposite to the one surface under the following conditions.

Electrolyte solution: LiTFSI/PC = 1/10 (molar ratio)
Reduction current density: 10 µA/cm²
Oxidation current density: 10 µA/cm²
Treatment time: 332 hours

When the cross section of the treated aluminum foil substrate was observed by SEM, it was confirmed that a porous region was formed throughout the thickness of the aluminum foil substrate. On the other surface of the aluminum foil substrate, formation of a covering layer disposed so as to cover the porous region was observed. When components in the covering layer and the porous region were confirmed by Auger electron spectroscopy or the like, it was confirmed that the covering layer was formed of an Al-Li alloy, and the Al-Li alloy was contained in the porous region. This was used as an aluminum foil B.

### <Example 1>

### [Negative Electrode]

The aluminum foil A was cut into a predetermined electrode size and used as a negative electrode.

### [Positive Electrode]

LiCoO₂ as a positive electrode active material, carbon black as a conductive agent, and PVdF as a binder were mixed at a mass ratio of 94 : 3 : 3 in NMP to prepare a positive electrode mixture slurry. Next, the positive electrode mixture slurry was applied onto a positive electrode current collector made of an Al foil, and the applied film was dried and then rolled by a rolling roller. Then, the obtained electrode was cut into a predetermined electrode size to obtain a positive electrode.

### [Electrolyte Solution]

A solution obtained by mixing LiPF₆ and PC at a molar ratio of 1/10 (LiPF₆/PC) was used as an electrolyte solution.

### [Test Cell]

The electrode assembly in which the positive electrode and the negative electrode were disposed so as to face each other with a polypropylene separator (manufactured by Celgard, LLC, #3401) interposed therebetween and the electrolyte solution were housed in a cup-shaped battery case. The battery case was sealed with a sealing plate via a gasket disposed in an opening of the battery case to produce a test cell.

### <Example 2>

A test cell was produced in the same manner as in Example 1 except that the aluminum foil B was cut into a predetermined size and used as a negative electrode.

### <Comparative Example 1>

A test cell was produced in the same manner as in Example 1 except that the aluminum foil substrate on which the porous region was not formed was used as a negative electrode.

### [Charge-Discharge Test]

The test cells of Examples 1 and 2 and Comparative Example 1 were charged at a constant current of 0.01 C in an environment of 25°C until the battery voltage reached 4.3 V. Next, the battery was discharged at a constant current of 0.01 C until the battery voltage reached 2.5 V. This charge-discharge cycle was performed for 20 cycles.

Charge-discharge efficiency ((discharge capacity/charge capacity) × 100) at the 20th cycle was 93.1% in Example 1, 93.3% in Example 2, and 92.4% in Comparative Example 1. These results show that, in Examples 1 and 2 using the aluminum foil having a porous region formed throughout the thickness of the aluminum foil substrate, as a negative electrode, deterioration of charge-discharge cycle characteristics can be suppressed as compared with Comparative Example 1 using the aluminum foil in which the porous region is not formed, as a negative electrode.

In addition, the initial charge-discharge efficiency was 74.7% in Example 1, 74.8% in Example 2, and 74.4% in Comparative Example 1. These results show that, as in Example 2, by using an aluminum foil in which an Al-Li alloy is present in a porous region and an Al-Li alloy layer disposed on one surface of an aluminum foil substrate so as to cover the porous region is provided, as a negative electrode, initial charge-discharge efficiency can be improved.

### <Example 3>

Both chambers of the production apparatus illustrated in Fig. 4 were filled with an electrolyte solution of LiTFSI/PC = 1/10 (molar ratio). Then, an oxidation current of 1 mA/cm² was applied to both surfaces of an aluminum foil having a thickness of 12 µm for 1 second to obtain an aluminum foil C in which a porous region is present throughout the thickness of the aluminum foil substrate.

As illustrated in Fig. 6, a test cell was produced in which the inside of a container was separated into a positive electrode chamber and a negative electrode chamber by a separator, a positive electrode (working electrode) and a positive electrode electrolyte solution were housed in the positive electrode chamber, and a negative electrode (counter electrode) and a negative electrode electrolyte solution were housed in the negative electrode chamber. The aluminum foil C was used as a separator. A platinum mesh electrode was used for the positive electrode, and a lithium metal electrode was used for the negative electrode. An electrolyte solution in which LiTFSI was dissolved in an amount of 1 mol with respect to 10 mol of a solvent of propylene carbonate (PC) was used as a positive electrode electrolyte solution. An electrolyte solution in which LiTFSI was dissolved in an amount of 1 mol with respect to 10 mol of a solvent of diethylene glycol dimethyl ether (diglyme) was used as a negative electrode electrolyte solution.

### <Example 4>

Both chambers of the production apparatus illustrated in Fig. 4 were filled with an electrolyte solution of LiTFSI/PC = 1/10 (molar ratio). Then, a reduction current of 1 mA/cm² was applied to one surface of an aluminum foil having a thickness of 12 µm and an oxidation current of 1 mA/cm² was applied to the other surface for 10 hours to obtain an aluminum foil D in which a porous region is present throughout the thickness of the aluminum foil substrate and an Al-Li alloy layer is present. A test cell was prepared in the same manner as in Example 3 except that the aluminum foil D was used as a separator.

### <Comparative Example 2>

A test cell was produced in the same manner as in Example 3 except that a polypropylene separator (manufactured by Celgard, LLC, #3401) was used.

In the test cells of Examples 3 and 4 and Comparative Example 2, a voltage of 4.3 V was applied between the positive electrode (working electrode) and the negative electrode (counter electrode) for 50 hours, and the current value between the positive electrode and the negative electrode was measured. As a result, the current value remained at 0.1 µA or less in the test cells of Examples 3 and 4, but the current value remained at about 0.6 µA in the test cell of Comparative Example 2.

In the test cells of Examples 3 and 4 and Comparative Example 2, a voltage of 4.5 V was applied between the positive electrode (working electrode) and the negative electrode (counter electrode) for 50 hours, and the current value between the two electrodes was measured. As a result, the current value was 0.2 µA in the test cell of Example 3, the current value was 0.18 µA or less in the test cell of Example 4, and the current value was about 1 µA in the test cell of Comparative Example 2.

In the test cells of Examples 3 and 4 and Comparative Example 2, a voltage of 4.7 V was applied between the positive electrode (working electrode) and the negative electrode (counter electrode) for 100 hours, and the current value between the two electrodes was measured. As a result, in the test cell of Example 3, the current value was 0.25 µA, and in the test cell of Example 4, the current value was 0.2 µA or less, but in the test cell of Comparative Example 2, the current value was about 6 µA.

As described above, in Examples 3 and 4 using the aluminum foil having a porous region formed throughout the thickness of the aluminum foil substrate, as a separator, the current value between the two electrodes remained at a very low value even when a high voltage was applied. The result shows that, in Examples 3 and 4, the movement of the solvent in the negative electrode electrolyte solution in the negative electrode chamber to the positive electrode chamber through the separator was suppressed, and oxidative decomposition of the electrolyte solution in the positive electrode chamber was hardly occurred. This makes it possible to achieve the high energy density, high durability, and high output of the lithium secondary battery. On the other hand, in Comparative Example 2 using the polypropylene separator, the current value between the two electrodes remained at a high value when a high voltage was applied, as compared with Examples 3 and 4. The result shows that, in Comparative Example 2, the movement of the solvent in the negative electrode electrolyte solution in the negative electrode chamber to the positive electrode chamber through the separator cannot be suppressed, and oxidative decomposition of the electrolyte solution in the positive electrode chamber occurred as compared with Examples 3 and 4.

In Examples 3 and 4, when the platinum mesh was replaced with an electrode (positive electrode) using LiNi_{1/3}Mn_{1/3}Co_{1/3}O₂ as a positive electrode active material, and the positive electrode electrolyte solution was replaced with a solution (LiPF₆/PC = 1/10 (molar ratio)), a charge-discharge reaction (voltage range: 2.5 to 4.7 V) associated with the movement of lithium ions between the positive electrode and the negative electrode was confirmed. That is, the aluminum foils used in Examples 3 and 4 have a lithium ion permeation property, and can be used as a separator.

### REFERENCE SIGNS LIST

- 1: Production apparatus
- 10: First chamber
- 11: Second chamber
- 13: Electrolytic bath
- 14, 15: Electrolyte solution
- 16, 17: Counter electrode
- 18: Aluminum foil substrate
- 20, 30: Lithium secondary battery
- 21: Battery case
- 22, 32: Positive electrode
- 23, 33: Negative electrode
- 24, 34: Separator
- 25: Gasket
- 26: Sealing plate
- 27: Electrolyte solution
- 36: Positive electrode electrolyte solution
- 38: Negative electrode electrolyte solution
- 40: Container
- 42: Positive electrode chamber
- 44: Negative electrode chamber
- 46: Positive electrode gel electrolyte layer
- 48: Negative electrode gel electrolyte layer
- 50: Porous sheet
- 100: Aluminum foil
- 100a: Aluminum foil substrate
- 100b: Porous region
- 100c: Al-Li alloy layer

## Claims

1. An aluminum foil comprising an aluminum foil substrate having a porous region, wherein
the porous region is formed throughout a thickness of the aluminum foil substrate.

2. The aluminum foil according to claim 1, wherein an Al-Li alloy is present in the porous region.

3. An aluminum foil comprising an Al-Li alloy layer disposed on one surface or both surfaces of the aluminum foil substrate so as to cover the porous region.

4. A negative electrode for a lithium secondary battery comprising the aluminum foil according to any one of claims 1 to 3.

5. A separator for a lithium secondary battery comprising the aluminum foil according to any one of claims 1 to 3.

6. A lithium secondary battery comprising the negative electrode for a lithium secondary battery according to claim 4.

7. A lithium secondary battery comprising: a positive electrode; a negative electrode; and the separator for a lithium secondary battery according to claim 5 provided between the positive electrode and the negative electrode, wherein the positive electrode and the negative electrode are separated from the separator for a lithium secondary battery.

8. The lithium secondary battery according to claim 7, further comprising a gel electrolyte layer between the positive electrode and the separator for a lithium secondary battery and between the negative electrode and the separator for a lithium secondary battery.

9. The aluminum foil according to any one of claims 1 to 3, wherein an average pore size of the porous region is in a range of 0.00001 µm to 10 µm.
